# EUROPEAN PATENT APPLICATION

(11) **EP 4 300 664 A1**
(43) Date of publication of application: **03.01.2024**
(21) Application number: 22831868.9
(22) Date of filing: 24.06.2022
(51) Int. Cl.: H01M 50/103, H01M 50/176

(54) **BATTERY HOUSING, BATTERY, AND ELECTRONIC DEVICE**

(30) Priority: 29.06.2021 CN 202121461080 U
(71) Applicant: BYD Company Limited, Shenzhen, Guangdong 518118 (CN)
(72) Inventor: TANG, Guosheng, Shenzhen, Guangdong 518118 (CN); LIANG, Liwei, Shenzhen, Guangdong 518118 (CN); HU, Shumin, Shenzhen, Guangdong 518118 (CN); ZHANG, Jian, Shenzhen, Guangdong 518118 (CN); OUYANG, Jinzhong, Shenzhen, Guangdong 518118 (CN)
(74) Representative: Arnold & Siedsma
(86) International application number: PCT/CN2022/101061
(87) International publication number: WO 2023/274054

(57) **Abstract**

A battery housing includes a first housing and a second housing. An accommodating space with an opening is defined by a bottom plate, two first side plates and two second side plates of the first housing. The second housing includes a body, and two first extending plates and two second extending plates arranged on a peripheral edge of the body. An avoiding region is formed on one second side plate. In a first direction, a width dimension of the second extending plate corresponding to the second side plate provided with the avoiding region is smaller than or equal to a width dimension of the avoiding region, and additionally, a width of the two first extending plates is greater than a width of the second extending plate. The second housing covers the opening of the first housing, and the two first extending plates and the two first side plates are fixedly connected.

## Description

### CROSS-REFERENCE TO RELATED APPLICATIONS

The present disclosure claims priority of Chinese Patent Application No. 202121461080.2 filed on June 29, 2021 and entitled "BATTERY HOUSING AND BATTERY". The entire content of the above-referenced application is herein incorporated by reference.

### FIELD

The present disclosure relates to the field of batteries, and more specifically, to a battery housing, a battery using the battery housing and an electronic device using the battery.

### BACKGROUND

A battery housing is a necessary assembly for protecting a battery. The battery housing consists of a main housing and a cover plate. For a thin-wall battery in the related art, a flange is generally arranged at a side wall of the main housing in order to ensure the sealing reliability of the cover plate and the main housing, and then, the sealed connection between the cover plate and the main housing is realized through the flange. However, the flange structure may increase an outer side space of the battery housing, so that the battery housing may occupy a great space, and it is unfavorable for improving the energy density of the battery.

### SUMMARY

The present disclosure aims at providing a battery housing and a battery to solve the technical problems of an existing battery housing that a flange exists, so that a great space is occupied, and the condition is unfavorable for improving the energy density of the battery.

In order to solve the above problems, the present disclosure provides a battery housing. The battery housing includes a first housing and a second housing. The first housing includes a bottom plate, two opposite first side plates and two opposite second side plates. The two first side plates are respectively connected with the two second side plates, and an accommodating space with an opening is defined by the two first side plates, the second side plates and the bottom plate. The second housing includes a body, two opposite first extending plates and two opposite second extending plates. The two first extending plates and the two second extending plates are arranged on a peripheral edge of the body. An avoiding region is formed on one of the second side plates. The avoiding region extends in a direction from one end of the second side plate far away from the bottom plate to the bottom plate, and the direction is a first direction. A width dimension of the second extending plate corresponding to the second side plate provided with the avoiding region in the first direction is smaller than or equal to a width dimension of the avoiding region. A width of the two first extending plates in the first direction is greater than a width of the second extending plate corresponding to the second side plate provided with the avoiding region in the first direction.

Optionally, the second housing covers the opening of the first housing. The two first extending plates and the two second extending plates extend into the accommodating space in the first direction. The two first extending plates are fixedly connected with the two first side plates, and the two second extending plates are fixedly connected with the corresponding two second side plates so as to seal the accommodating space of the first housing.

Optionally, a width dimension of the first extending plates in the first direction is the same as a width dimension of the first side plates in the first direction.

Optionally, a length dimension of at least a part of the first extending plate in a second direction is smaller than a length dimension of the first side plate in the second direction.

Optionally, a dimension of the second extending plates in the first direction is equal to or greater than 0.5 mm.

Optionally, the second extending plate corresponding to the second side plate provided with no avoiding region is abutted against the bottom plate.

Optionally, a surface of the body includes two opposite first edges and two opposite second edges connected with the two first edges, the two first extending plates are respectively located in positions of the two first edges and are connected with the body, and the two second extending plates are respectively located in positions of the two second edges and are connected with the body. The two second extending plates have the same width dimensions in the first direction.

Optionally, a width dimension of the first extending plates in the first direction is greater than the width dimension of the second extending plates in the first direction.

Optionally, the width dimension of the second extending plates in the first direction is 1/5 to 1/4 of the width dimension of the first extending plates in the first direction.

Optionally, the first extending plates and the second extending plates are both vertically connected with the body.

Optionally, materials of the first housing and the second housing are both stainless steel.

Optionally, a thickness of each of the first housing and the second housing is 0.03 mm to 0.1 mm.

Optionally, a thickness of the first extending plates is smaller than or equal to a thickness of the second housing.

Optionally, a thickness of the second extending plates is equal to or smaller than the thickness of the body.

Optionally, the first extending plates and the second extending plates are both fixedly connected with the side plates through laser welding.

Optionally, the second housing is embedded in the first housing, and does not extend out of the first housing, and a peripheral side of the second housing is located in the first housing.

The present disclosure also provides a battery, including a battery cell and the battery housing. The battery cell is accommodated in the accommodating space.

Optionally, a terminal is arranged on the second side plate provided with the avoiding region. The terminal is arranged in a region except for the avoiding region on the second side plate provided with the avoiding region.

The present disclosure further provides an electronic device, including a device body and the battery.

Based on the above, in the present disclosure, by arranging the first extending plates and the second extending plates on the second housing and extending the first extending plates and the second extending plates into the accommodating space of the first housing to be connected with the side plates of the first housing, the assembly of the first housing and the second housing of the battery housing is realized. The first extending plates and the second extending plates of the battery housing provided by the present disclosure completely extend into the accommodating space of the first housing, the outside of the battery housing is orderly, and the space occupied by the battery housing can be reduced. At the same time, the battery housing can realize the fixed connection between the first housing and the second housing and the package of the battery housing without arrangement of a flange, the space occupied by the battery housing is further reduced, the space utilization rate can be effectively improved, and the energy density of the battery is increased. Additionally, the width dimension of the second extending plate corresponding to the second side plate provided with the avoiding region in the first direction is set to be smaller than or equal to the width dimension of the avoiding region in the first direction, so that the abutting contact between the second extending plate and a structure such as the terminal and a sealing nail on the second side plate can be avoided.

### BRIEF DESCRIPTION OF THE DRAWINGS

To describe the technical solutions of the embodiments of the present disclosure or in the related art more clearly, the following briefly introduces the accompanying drawings required for describing the embodiments or the related art. Apparently, the accompanying drawings in the following description show only some embodiments of the present disclosure, and a person of ordinary skill in the art may still derive other drawings from these accompanying drawings without creative efforts.
FIG. 1 is a schematic structure diagram of a battery housing provided by an embodiment of the present disclosure.
FIG. 2 is a schematic diagram of an exploded structure of the battery housing as shown in FIG. 1.
FIG. 3 is a schematic diagram of a partial structure of the battery housing as shown in FIG. 1.
FIG. 4 is a schematic diagram of a partial structure of a battery housing provided by another embodiment of the present disclosure.
FIG. 5 is a schematic diagram of a partial structure of the battery housing as shown in FIG. 1.
FIG. 6 is a cross-sectional diagram of a battery provided by an embodiment of the present disclosure.
FIG. 7 is a schematic diagram of an electronic device provided by an embodiment of the present disclosure.

### DETAILED DESCRIPTION

The technical solutions in embodiments of present disclosure are clearly and completely described in the following with reference to the accompanying drawings in the embodiments of present disclosure. Apparently, the described embodiments are merely some rather than all of the embodiments of present disclosure. All other embodiments obtained by a person of ordinary skill in the art based on the embodiments of present disclosure without making creative efforts shall fall within the protection scope of the present disclosure.

The present disclosure provides a battery. The battery includes a battery cell and a battery housing. The battery housing will be specifically illustrated hereafter.

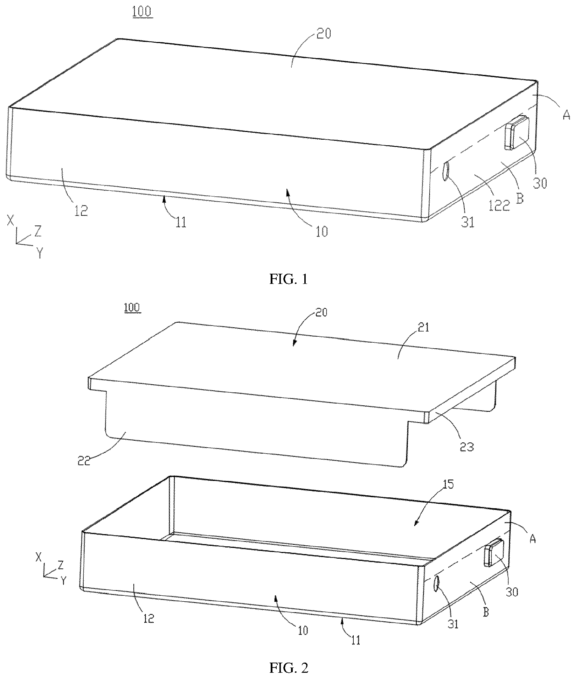

Referring to FIG. 1 and FIG. 2, the present disclosure provides a battery housing 100. In the embodiment, the battery housing 100 is a cuboid. For convenient description, in the present disclosure, a height direction of the cuboid battery housing 100 is named as a first direction X, a length direction of the battery housing 100 is named as a second direction Y, and a width direction of the battery housing 100 is named as a third direction Z.

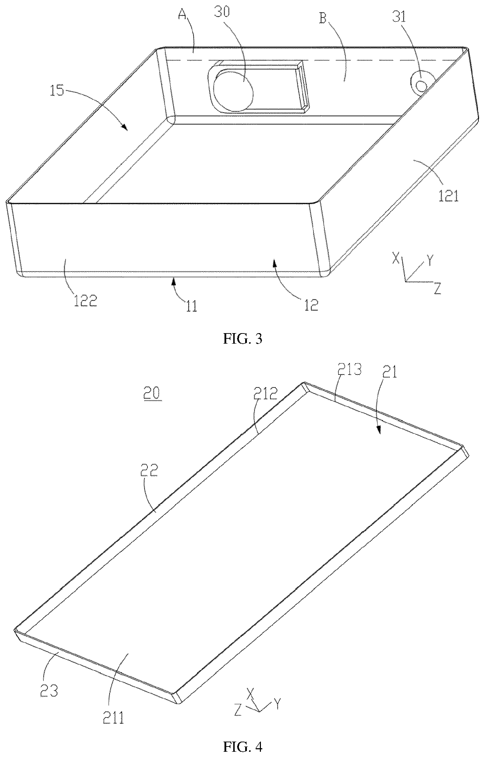

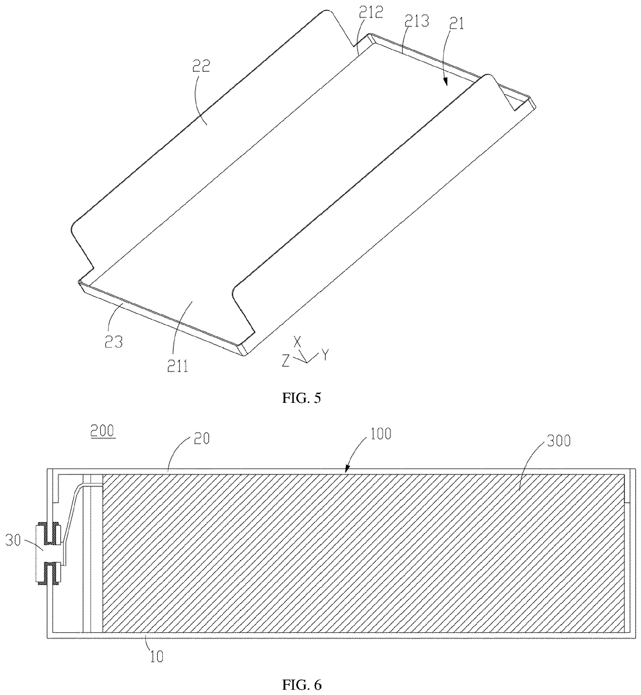

The battery housing 100 includes a first housing 10 and a second housing 20. The first housing 10 includes a bottom plate 11 and side plates 12 arranged around a peripheral edge of the bottom plate 11. The side plates 12 include two first side plates 121 and two second side plates 122. An accommodating space 15 with an opening is defined by the bottom plate 11, the two first side plates 121 and the two second side plates 122. The second housing 20 includes a body 21, two opposite first extending plates 22 and two opposite second extending plates 23. The first extending plates 22 and the second extending plates 23 are arranged on a peripheral edge of the body 21. The body 21 includes a surface 211 (as shown in FIG. 4 and FIG. 5), the first extending plates 22 and the second extending plates 23 surround a peripheral edge of the surface 211 of the body 21, and the first extending plates 22 and the second extending plates 23 are both connected with the body 21 in a manner of forming an included angle. The second housing 20 covers the opening of the first housing 10, the two first extending plates 22 and the two second extending plates 23 extend into the accommodating space 15 in the first direction X, the two first extending plates 22 and the two first side plates 121 are fixedly connected, and the two second extending plates 23 are fixedly connected with the corresponding second side plates 122 so as to seal the accommodating space 15 of the first housing 10.

In the embodiment, by arranging the first extending plates 22 and the second extending plates 23 on the second housing 20 and extending the first extending plates 22 and the second extending plates 23 into the accommodating space 15 of the first housing 10 to be connected with the side plates 12, the package of the battery housing 100 is realized, and the sealing performance of the battery housing 100 is increased. Additionally, the first extending plates 22 and the second extending plates 23 achieve an effect of enhancing the strength of the battery housing 100. The first extending plates 22 and the second extending plates 23 of the battery housing 100 completely extend into the accommodating space 15 of the first housing 10, an outside structure of the battery housing 100 is orderly, and the space occupied by the battery housing 100 can be reduced. At the same time, the battery housing 100 can realize the assembly of the first housing 10 and the second housing 20 without arrangement of a flange, the space occupied by the battery housing 100 is small, the space utilization rate can be effectively improved, and the energy density of a battery 200 is increased. The first housing 10 and the second housing 20 are fixed and sealed through welding.

Further, an avoiding region A is formed on one of the second side plates 122, the avoiding region A extends in a direction from one end of the second side plate 122 far away from the bottom plate 11 to the bottom plate 11, and the direction is a first direction X. A dimension of the second extending plate 23 corresponding to the second side plate 122 provided with the avoiding region in the first direction X is smaller than a dimension of the avoiding region A in the first direction X, and the dimension of the two first extending plates 22 in the first direction X is equal to or greater than a dimension of the second extending plate 23 corresponding to the second side plate provided with the avoiding region in the first direction X. In other implementations, a dimension of the second extending plate 23 corresponding to the second side plate 122 provided with the avoiding region A in the first direction X may be equal to the dimension of the avoiding region A in the first direction X. Structures such as a terminal 30 and a sealing nail 31 may be arranged in a region, except for the avoiding region A, on the second side plate 122 provided with the avoiding region A. In the embodiment, by setting the dimension of the second extending plate 23 corresponding to the second side plate 122 provided with the avoiding region A in the first direction X to be smaller than or equal to the dimension of the avoiding region A in the first direction X, the abutting contact between the second extending plate 23 and a structure such as the terminal 30 and the sealing nail 31 on the second side plate 122 can be avoided.

Specifically, referring to FIG. 3, the bottom plate 11 of the first housing 10 is in a rectangular shape, and the side plates 12 include two opposite first side plates 121 and two opposite second side plates 122. Of course, the bottom plate 11 may be in other shapes, such as a round shape and a pentagon shape. In the embodiment, the side plates 12 are vertically connected with the bottom plate 11. In other embodiments, the side plates 12 may also be connected with the bottom plate 11 in a manner of forming an obtuse angle or an acute angle. The first side plates 121 and the second side plates 122 are in end-to-end connection and surround the peripheral edge of the bottom plate 11. An accommodating space 15 with an opening is defined by the bottom plate 11, the two first side plates 121 and the two second side plates 122. A length dimension of the first side plates 121 in the second direction Y is a length of the battery housing 100, a length dimension of the second side plates 122 in the third direction Z is a width of the battery housing 100, and the width dimension of the first side plates 121 and the second side plates 122 in the first direction X is a height of the battery housing 100.

Referring to FIG. 4 and FIG. 5, the second housing 20 includes a body 21, first extending plates 22 and second extending plates 23. A size and a shape of the body 21 are the same as those of the bottom plate 11, or the body 21 may be a little smaller than the bottom plate 11. In the embodiment, the body 21 is in a rectangular shape. The rectangular body 21 includes a surface 211, and the surface 211 includes two opposite first edges 212 and two opposite second edges 213. The first edges 212 and the second edges 213 are in end-to-end connection to form a peripheral edge of the rectangular body 21. The quantity of the first extending plates 22 is two, and the quantity of the second extending plates 23 is two. The two first extending plates 22 are located in positions of the two first edges 212 and are connected with the body 21, and the two second extending plates 23 are located in positions of the two second edges 213 and are connected with the body 21.

Referring to FIG. 2 together, the body 21 covers the opening of the accommodating space 15 of the first housing 10, and the first extending plates 22 and the second extending plates 23 extend into the accommodating space 15 and extend along the side plates 12. The two first extending plates 22 are respectively and fixedly connected with the two first side plates 121, and the two second extending plates 23 are respectively and fixedly connected with the two second side plates 122, so that the accommodating space 15 is sealed. The first housing 10 and the second housing 20 form a sealed space.

Referring to FIG. 1 and FIG. 4, in an implementation, the second side plate 122 provided with the avoiding region A further includes an installing region B, and the installing region B extends from one end of the second side plate 122 near the bottom plate 11 to the avoiding region A. The avoiding region A and the installing region B jointly form all regions of the second side plate 122. Specifically, the installing region B may be provided with a structure such as a terminal 30, an electrolyte solution filling port or a sealing nail 31. A width dimension of each of the first extending plates 22 and the second extending plates 23 in the first direction X is smaller than a width dimension of the avoiding region A in the first direction X. In other implementations, a width dimension of the first extending plates 22 and the second extending plates 23 in the first direction X may be just equal to the width dimension of the avoiding region A in the first direction X. Therefore, the abutting contact among the first extending plate 22, the second extending plate 23 and a structure such as the terminal 30, the electrolyte solution filling port or the sealing nail 31 located in the installing region B of the side plate 12 can be avoided, so that the connection stability among the first extending plates 22, the second extending plates 23 and the side plates 12 can be increased. At the same time, the first extending plates 22 and the second extending plates 23 achieve an effect of increasing the structure strength of the battery housing 100. Duplex protection is achieved by the side plates 12 and the first extending plates 22 or the side plates 12 and the second extending plates 23 at the lateral side of the battery housing 100, and the strength of the battery housing 100 can be increased by the side plates 12. In an implementation, the first extending plates 22 and the second extending plates 23 are provided with reinforcing rib structures to increase the strength of the first extending plates 22 and the second extending plates 23, so that the strength of the battery housing 100 is further increased.

In some embodiments of the present disclosure, the width dimension of the first extending plates 22 in the first direction X is the same as the width dimension of the first side plates 121 in the first direction X. Therefore, the matching strength between the first housing 10 and the second housing 20 can be improved. Additionally, a length dimension of at least a part of the first extending plate 22 in the second direction Y may be set to be smaller than a length dimension of the first side plate 121 in the second direction Y.

Referring to FIG. 1 and FIG. 2, in an implementation, a width dimension of the second extending plate corresponding to the second side plate 122 provided with the avoiding region A in the first direction is smaller than the width dimension of the avoiding region in the first direction, or equals to the width dimension of the avoiding region A in the first direction X. The width dimension of each of the second extending plate corresponding to the second side plate 122 provided with no avoiding region A and the two first extending plates in the first direction is the same as the width dimension of the side plate 12 in the first direction X. The "same" herein may be the same size, and may allow the existence of machining tolerance. In the embodiment, on the premise of enabling the second extending plates not to generate abutting contact with the structure such as the terminal 30, the electrolyte solution filling port or the sealing nail 31 arranged in the installing region B, the width dimension of the first extending plate and the second extending plate corresponding to the side plate 122 provided with no avoiding region in the first direction is possibly increased, so that the contact area between the extending plate and the side plate can be increased, and the connection stability between the first housing and the second housing can be enhanced.

Referring to FIG. 2 and FIG. 5, in an implementation, the width dimensions of the two second extending plates 23 in the first direction X are identical and are respectively equal to the width dimension of the avoiding region A in the first direction X. Of course, the width dimensions of the two second extending plates 23 in the first direction X may be smaller than the width dimension of the avoiding region A in the first direction X. The width dimensions of the two first extending plates 22 are the same as the width dimensions of the side plates 12 in the first direction X. The "same" herein may be the same size, and may allow the existence of machining tolerance. The width dimensions of the first extending plates 22 in the first direction X is greater than the width dimensions of the second extending plates 23 in the first direction X. The first extending plates 22 extend into the first housing 10 along the first side plates 121 to be in contact with the bottom plate 11. The "contact" herein may be zero-distance contact, and may be contact with a little gap. The second extending plates 23 extend into the first housing 10 along the second side plates 122 and are fixedly connected with the first regions of the second side plates 122.

In the embodiment, on the premise of enabling the second extending plates 23 not to generate abutting contact with the structure such as the terminal 30, the electrolyte solution filling port or the sealing nail 31 arranged in the second region of the second side plate 122, the width dimension of the first extending plate 22 in the first direction X is possibly increased, so that the contact area between the first extending plate 22 and the first side plate 121 can be increased, and the connection stability between the first housing 10 and the second housing 20 can be enhanced. In the embodiment, the width dimensions of the two second extending plates 23 in the first direction X are identical and are respectively equal to the width dimension of the avoiding region A in the first direction X. A preparation process of the battery housing 100 can be simplified. At the same time, the first extending plates 22 and the second extending plates 23 achieve an effect of increasing the strength of the battery housing 100. Duplex protection is achieved by the side plates 12 and the first extending plates 22 or the side plates 12 and the second extending plates 23 at the lateral side of the battery housing 100, and the strength of the battery housing 100 can be increased by the side plates 12. The width dimension of the first extending plates 22 in the first direction X is set to be greater, and the strength of the battery housing 100 can be further increased. In an implementation, the first extending plates 22 and the second extending plates 23 are provided with reinforcing rib structures to increase the strength of the first extending plates 22 and the second extending plates 23, so that the strength of the battery housing 100 is further increased.

In an implementation, a distance between ends of the second extending plates 23 at two sides of the second housing 20 far away from the body 21 is smaller than the length dimension of the body 21 in the second direction Y. Therefore, the second extending plates 23 can more conveniently extend into the accommodating space 15.

Referring to FIG. 2, in an implementation, a width dimension of the side plates 12 in the first direction X is 2 mm to 7 mm. Of course, the width dimension of the side plates 12 in the first direction X may be greater than 7 mm or smaller than 2 mm. The dimension of the side plates 12 in the first direction X may be properly adjusted according to a thickness of the housing 10. The dimension of the first extending plates 22 in the first direction X equals to the dimension of the side plates 12 in the first direction X. The width dimension of the second extending plates 23 in the first direction X is 1/5 to 1/4 of the width dimension of the first extending plates 22 in the first direction X. In addition, the dimension of the second extending plates 23 in the first direction X is equal to or greater than 0.5 mm. In other implementations, the width dimension of the first extending plates 22 and the second extending plates 23 in the first direction X is also properly adjusted according to the width dimension of the side plates 12 in the first direction X as long as the first extending plates 22 and the second extending plates 23 can extend into the accommodating space 15 of the first housing 10 to be fixedly connected with the side plates 12, and the second housing 20 can seal the accommodating space 15 of the first housing 10.

Additionally, the second extending plate (23) corresponding to the second side plate (122) provided with no avoiding region is abutted against the bottom plate (11). Therefore, the structure strength of the battery housing is improved.

In an implementation, the first extending plates 22 and the second extending plates 23 are both vertically connected with the body 21. In the embodiment, the side plates 12 are also vertically connected with the bottom plate 11. In a case that the first extending plates 22 and the second extending plates 23 extends into the accommodating space 15 along the side plates 12, the first extending plates 22 and the second extending plates 23 are both parallel to the side plates 12, and gaps between the first extending plates 22 and the corresponding first side plates 121 and gaps between the second extending plates 23 and the corresponding second side plates 122 are uniform. In a case that the first extending plates 22 and the second extending plates 23 are fixedly connected with the corresponding side plates 12 through welding or in other connection manners, the stress of each connection points can be uniform, so that the connection stability between the first housing 10 and the second housing 20 is ensured.

Materials of the first housing 10 and the second housing 20 are both stainless steel. The stainless steel housings have high strength, and achieve a protection effect on an inside battery cell, so that the battery is protected from falling damage. At the same time, the stainless steel housings also have good airtightness, so that the battery is protected from steam invasion. Of course, besides stainless steel, materials of the first housing 10 and the second housing 20 may be other alloy materials, such as nickel alloy and chromium alloy. Additionally, the first housing 10 and the second housing 20 made of alloy materials are conductive, and can be used as a negative electrode of the battery, and therefore, an effect of simplifying a battery structure is achieved.

In an implementation, thicknesses of the first housing 10 and the second housing 20 are 0.03 mm to 0.1 mm. The materials of the first housing 10 and the second housing 20 are alloy, and have high hardness and ductility, so in a case that the thicknesses of the first housing 10 and the second housing 20 are only 0.03 mm to 0.1 mm, the package requirement of the battery cell can be met. Therefore, the size of the battery housing 100 can be reduced, and the energy density of the battery 200 can be increased.

In an implementation, a thickness of the first extending plates 22 equals to a thickness of the body 21. In other implementations, the thickness of the first extending plates 22 may also be smaller than the thickness of the body 21. Specifically, the thickness of the first extending plates 22 in the third direction Z is 1/3 to 1/2 of the thickness of the body 21 of the second housing 20 in the third direction Z. Good sealing performance between the first housing 10 and the second housing 20 is ensured. At the same time, by reducing the thickness of the first extending plate 22, the battery housing 100 has a greater accommodating space, so that the space utilization rate of the battery housing 100 is improved, and the energy density of the battery 200 is further increased.

In a specific implementation, the dimension of the battery housing 100 in the first direction X is 4.0 mm, the thickness of the first housing 10 is 0.075 mm, the dimension of the first extending plates in the first direction X is 3.85 mm, and the dimension of the second extending plates 23 in the first direction X is 0.8 mm.

Further, the first extending plates 22 and the second extending plates 23 are both fixedly connected with the side plates 12 through laser welding. In the embodiment, the sealing between the first housing 10 and the second housing 20 is realized through laser welding, so that the connection process between the first housing 10 and the second housing 20 is simple and reliable. When the battery cell is contained in the accommodating space 15, laser welding sites are between the first extending plates 22 and the first side plates 121 and between the second extending plates 23 and the second side plates 122, a protection effect is achieved on the battery cell, and the scald damage to the battery cell caused by laser leakage in the welding process can be avoided. Additionally, the laser welding is more precise, and thin-wall welding can be realized. In a case that the thicknesses of the first housing 10 and the second housing 20 are very small, the connection between the first housing 10 and the second housing 20 may be tighter and stabler through the laser welding process. Of course, in other embodiments, the first extending plates 22 and the second extending plates 23 may also be welded with the side plates 12 through processes such as high-frequency welding and argon arc welding.

As shown in FIG. 6, the second housing 20 is embedded in the first housing 10 and does not extend out of the first housing 10. The peripheral side of the second housing 20 is located in the first housing 10.

Referring to FIG. 6, the present disclosure further provides a battery 200, and the battery 200 includes a battery cell 300 and the battery housing 100. The battery cell 300 is accommodated in the accommodating space 15. The battery 200 can realize the package without arrangement of a flange. The battery 200 occupies a small space, and the space utilization rate and the energy density are high. The battery 200 may be applied to an electronic device to provide electricity for the electronic device.

The battery cell 300 may be of a coiled structure or a laminated structure. The battery cell 300 includes an electrolyte. The electrolyte may include liquid with one or more salt compounds dissolved in one or more solvents. The salt compounds may include lithium-containing salt compounds, may include one or more lithium salts, may also include lithium compounds doped with one or more halogen elements such as fluorine or chlorine, and may also include other non-metallic elements such as phosphorus and boron. The solvents may include one or more carbonic esters, such as propylene carbonate, ethylene carbonate, methyl ethyl carbonate, dimethyl carbonate, diethyl carbonate and fluoroethylene carbonate, and may be a combination of various solvents, for example, the solvent combination is a mixed solvent of propylene carbonate and methyl ethyl carbonate.

Referring to FIG. 1 together, a terminal 30 is arranged on the second side plate 122 provided with the avoiding region A, and the terminal 30 is arranged in a region except for the avoiding region A on the second side plate 122 provided with the avoiding region A. That is, the terminal 30 is arranged in the installing region B. The terminal 30 is insulated from the first housing 10 and the second housing 20 of the battery housing 100, and the terminal 30 is electrically connected with the battery cell. The installing region B may also be provided with an electrolyte solution filling port and a sealing nail 31, the electrolyte solution filling port is configured to fill electrolyte solution into the battery cell 300, and the sealing nail 31 is configured to seal the electrolyte solution filling port.

Specifically, in the embodiment, the terminal 30 is a positive terminal, the first housing 10 and the second housing 20 made of alloy materials may be used as a negative electrode of the battery 200. The electrolyte solution filling port penetrates through the second side plate 122 where it is located. The sealing nail 31 is in a T shape, and includes a covering section and an extending section connected with the covering section. The extending section extends into the electrolyte solution filling port from the outer surface 211 of the second side plate 122 where the electrolyte solution filling port is located, and the covering section covers the electrolyte solution filling port, and is welded onto the outer surface 211 of the second side plate 122 where the electrolyte solution filling port is located to seal the electrolyte solution filling port.

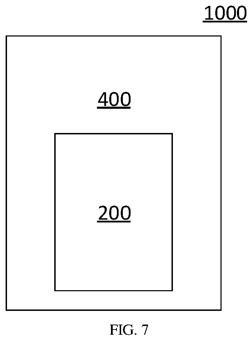

Additionally, as shown in FIG. 7, the present disclosure further provides an electronic device 1000. The electronic device may be a communication device such as a mobile phone and a tablet computer, and may be other devices requiring electricity. The electronic device 1000 may include a device body 400 and a battery 200. The battery may be the battery according to the embodiments of the present disclosure.

What is disclosed above are merely exemplary embodiments of the present disclosure, and certainly is not intended to limit the scope of the claims of the present disclosure. Therefore, those of ordinary skill in the art understand that equivalent variations realizing all or parts of processes of the above embodiments and made in accordance with the claims of the present disclosure shall fall within the scope of the present disclosure.

## Claims

1. A battery housing (100), comprising:
a first housing (10), comprising a bottom plate (11), two opposite first side plates (121) and two opposite second side plates (122), the two first side plates (121) being respectively connected with the two second side plates (122), and an accommodating space (15) with an opening being defined by the two first side plates, the second side plates and the bottom plate (11); and
a second housing (20), comprising a body (21), two opposite first extending plates (22) and two opposite second extending plates (23), the two first extending plates (22) and the two second extending plates (23) being arranged on a peripheral edge of the body (21);
the second housing (20) covering the opening of the first housing (10), the two first extending plates (22) and the two second extending plates (23) extending into the accommodating space (15) in a direction near the bottom plate (11), the two first extending plates (22) respectively corresponding to and being fixedly connected with the two first side plates (121), and the two second extending plates (23) respectively corresponding to and being fixedly connected with the two second side plates (122) so as to seal the accommodating space (15) of the first housing (10); and
an avoiding region (A) being formed on one of the second side plates (122), the avoiding region (A) extending in a direction from one end of the second side plate (122) far away from the bottom plate (11) to the bottom plate (11), the direction being a first direction (X), a width dimension of the second extending plate (23) corresponding to the second side plate (122) provided with the avoiding region (A) in the first direction being smaller than or equal to a width dimension of the avoiding region (A) in the first direction (X), and a width of the two first extending plates (22) in the first direction (X) being equal to or greater than a width of the second extending plate (23) corresponding to the second side plate (122) provided with the avoiding region (A) in the first direction (X).

2. The battery housing (100) according to claim 1, wherein a width dimension of the first extending plate (22) in the first direction (X) is the same as a width dimension of the first side plate (121) in the first direction (X).

3. The battery housing (100) according to claim 1 or 2, wherein a length dimension of at least a part of the first extending plate (22) in a second direction (Y) is smaller than a length direction of the first side plate (121) in the second direction (Y).

4. The battery housing (100) according to any one of claims 1 to 3, wherein a dimension of the second extending plates (23) in the first direction (X) is equal to or greater than 0.5 mm.

5. The battery housing (100) according to any one of claims 1 to 4, wherein the second extending plate (23) corresponding to the second side plate (122) provided with no avoiding region (A) is abutted against the bottom plate (11).

6. The battery housing (100) according to any one of claims 1 to 5, wherein a surface of the body (21) comprises two opposite first edges (212) and two opposite second edges (213) connected with the two first edges (212), the two first extending plates (22) are located in positions of the two first edges (212) and are connected with the body (21), the two second extending plates (23) are located in positions of the two second edges (213) and are connected with the body (21), and the two second extending plates (23) have the same width dimensions in the first direction (X).

7. The battery housing (100) according to claim 6, wherein a width dimension of the first extending plates (22) in the first direction (X) is greater than the width dimension of the second extending plates (23) in the first direction (X).

8. The battery housing (100) according to claim 7, wherein the width dimension of the second extending plates (23) in the first direction (X) is 1/5 to 1/4 of the width dimension of the first extending plates (22) in the first direction (X).

9. The battery housing (100) according to any one of claims 1 to 8, wherein the first extending plates (22) and the second extending plates (23) are both vertically connected with the body (21).

10. The battery housing (100) according to any one of claims 1 to 9, wherein materials of the first housing (10) and the second housing (20) are both stainless steel.

11. The battery housing (100) according to any one of claims 1 to 10, wherein a thickness of each of the first housing (10) and the second housing (20) is 0.03 mm to 0.1 mm.

12. The battery housing (100) according to any one of claims 1 to 11, wherein a thickness of the first extending plates (22) is smaller than or equal to a thickness of the body (21).

13. The battery housing (100) according to any one of claims 1 to 12, wherein a thickness of the second extending plates (23) is equal to or smaller than the thickness of the body (21).

14. The battery housing (100) according to any one of claims 1 to 13, wherein the first extending plates (22) and the second extending plates (23) are both fixedly connected with the side plates through laser welding.

15. The battery housing (100) according to any one of claims 1 to 14, wherein the second housing (20) is embedded in the first housing (10), and does not extend out of the first housing (10), and a peripheral side of the second housing (20) is located in the first housing (10).

16. A battery (200), comprising a battery cell (300) and a battery housing (100) according to any one of claims 1 to 15, the battery cell (300) being accommodated in the accommodating space (15).

17. The battery (200) according to claim 16, wherein a terminal (30) is arranged on the second side plate (122) provided with the avoiding region (A), and the terminal (30) is arranged in a region except for the avoiding region (A) on the second side plate (122) provided with the avoiding region (A).

18. An electronic device (1000), comprising a device body (400) and a battery (200) according to claim 16 or 17.
